# EUROPÄISCHE PATENTSCHRIFT

(11) **EP 1 231 083 B1**
(45) Veröffentlichungstag und Bekanntmachung des Hinweises auf die Patenterteilung: **10.09.2008**
(21) Anmeldenummer: 02002625.8
(22) Anmeldetag: 05.02.2002
(51) Int. Cl.: B60G 9/00, B60G 21/055

(54) **Achsaufhängung für Starrachsen von Nutzfahrzeugen**
Axle suspension for rigid axles in commercial vehicles
Suspension d'essieu pour essieux rigides de véhicules utilitaires

(30) Priorität: 09.02.2001 DE 10106350
(43) Veröffentlichungstag der Anmeldung: 14.08.2002
(73) Patentinhaber: ZF FRIEDRICHSHAFEN Aktiengesellschaft, 88038 Friedrichshafen (DE)
(72) Erfinder: Lenz, Paul, 94065 Waldkirchen (DE); Eickhoff, Mathias, Dr., 94081 Fürstenzell (DE)

(56) Entgegenhaltungen:
- EP-A- 0 430 368
- EP-A- 0 949 093
- EP-A- 1 057 665
- WO-A-01/08909
- DE-A- 4 413 146
- DE-A- 19 521 874
- DE-A- 19 957 628
- JP-A- 6 171 543
- JP-A- 10 218 012
- US-A- 2 827 282
- US-A- 4 858 948

## Beschreibung

Die vorliegende Erfindung betrifft eine Achsaufhängung für Starrachsen von Nutzfahrzeugen und insbesondere von Reisebussen gemäß dem Oberbegriff des Patentanspruchs 1.

Nach dem Stand der Technik weist eine Achsaufhängung auf jeder Fahrzeugseite einen Längslenker auf, der die Fahrzeugachse mit dem Fahrzeugaufbau vertikal verbindet, wobei die Längslenker ein Paar bilden und auf gleicher Höhe angeordnet sind. Desweiteren werden zusätzlich Mehrfachlenker verwendet, die in zu der Höhenlage der Längslenker versetzten Höhenlage einerseits mit der Fahrzeugachse und andererseits mit dem Fahrzeugaufbau verbunden sind. Üblicherweise sind die Mehrfachlenker als Vierpunktlenker ausgebildet.

Nach dem Stand der Technik wird ferner ein Stabilisierungselement benötigt, um seitlichen Wank- und Kippbewegungen entgegenzuwirken; es sind aber auch Lösungen bekannt, bei denen ein Mehrfachlenker über die Achsführungsfunktion hinaus die Stabilisierung übernimmt, wie es beispielsweise in der EP 0776 275 A1 offenbart ist. Hierbei handelt es sich um einen Vierpunktlenker, der als Kreuz mit definierter Kennlinie für die durch Verwindungen verursachten Torsionsspannungen ausgebildet ist.

Die DE 198 15 776 A1, die als nächster Stand der Technik angesehen wird, offenbart ebenfalls in diesem Zusammenhang eine Aufhängung einer Starrachse mit einem einstückigen Vierpunktlenker, der aus zwei gekreuzten Armen mit an jedem Ende einem Lagerauge und darin eingebautem Gelenk besteht. Mittels dieser Gelenke ist der Vierpunktlenker an einem Ende am Starrachskörper und an seinem zweiten Ende am Fahrzeugrahmen befestigt, wobei die Höhenlage verschieden als die der vorhandenen Längslenker ist. Dieser Vierpunktlenker ist auf die Funktionen Längskraftaufnahme, Seitenkraftaufnahme und Wankstabilisierung ausgelegt, so dass ein zusätzliches Stabilisierungselement entfällt.

Diese Konstruktion weist jedoch den Nachteil auf, dass vier Luftfedern benötigt werden, so dass die Raumökonomie erheblich eingeschränkt wird. Zudem erhöht sich dadurch das Gewicht der Achsaufhängung.

Der vorliegenden Erfindung liegt daher die Aufgabe zugrunde, ausgehend von dem eingangs erwähnten Stand der Technik eine Achsaufhängung für Starrachsen von Nutzfahrzeugen und insbesondere von Reisebussen anzugeben, welche möglichst wenige Bauteile enthält und möglichst wenig Bauraum beansprucht. Desweiteren soll die Achsaufhängung verbesserte Eigenschaften hinsichtlich Wankstabilisierung und Kraftaufnahme aufweisen.

Diese Aufgabe wird durch die Merkmale des kennzeichnenden Teils des Patentanspruchs 1 gelöst. Weitere Ausgestaltungen der Erfindung gehen aus den Unteransprüchen hervor.

Demnach weist die erfindungsgemäße Achsaufhängung an jeder Fahrzeugseite an der Fahrzeugachse angebrachte Längsträger sowie einen Mehrfachlenker, vorzugsweise einen Vierpunktlenker auf, der in Fahrtrichtung nach hinten angeordnet ist, wobei ein Ende des Vierpunktlenkers am Starrachskörper und das zweite Ende am Fahrzeugrahmen befestigt ist.

Erfindungsgemäß sind nur zwei Luftfedern vorgesehen, die ebenfalls in Fahrtrichtung nach hinten, vorzugsweise hinter den Reifen auf den Längsträgern angeordnet sind.

Gemäß der Erfindung ist die Anbindung der Längsträger mit der Achse und mit dem Fahrzeug gelenkig ausgebildet, beispielsweise mittels Gummigelenken. Dadurch wird das Fahrwerk des Fahrzeugs "weicher" und die Stabilisierung des Fahrzeuges erfolgt ausschließlich über den Vierpunktlenker. Durch Verwendung von vier elastischen Lagern, wie z. B. Gummilager, wird die Körperschallleitung verringert und der Achskörper wird beim Wanken nicht verspannt. Die Anbindungspunkte der Längsträger mit der Starrachse und dem Fahrzeugrahmen und die auf dem Längsträger vorgesehene Luftfeder sind auf einer Linie angeordnet, um ein Abkippen zu vermeiden.

Die erfindungsgemäße Konstruktion weist den Vorteil auf, dass durch die Anordnung des Vierpunktlenkers hinter den Rädern Raum gewonnen wird, der beispielsweise im Reisebus für eine Toilette, eine Küche oder auch für einen größeren Kofferraum Verwendung finden kann. Zudem wirkt diese Anordnung untersteuernd, was aus fahrdynamischer Sicht erwünscht ist.

Außerdem weisen die hinter den Federn angeordneten Stossdämpfer durch den längeren Weg ein besseres Ansprechverhalten auf, wobei die Kennlinie der Feder und der Stossdämpfer optimal angepasst werden kann, da der doppelte Federweg zur Verfügung steht.

Desweiteren verbessert sich durch die erfindungsgemäße Anordnung der Feder hinter den Reifen die Wankabstützung der Achsaufängung, da die Federn weiter nach außen positioniert werden können, als wenn sie hinten zwischen den Reifen angeordnet sind.

Als weiterer Vorteil erweist sich auch die Gewichtseinsparung der Achsaufhängung, da die Anzahl der Federn und Dämpfer verringert und der Federträger vereinfacht wird.

Die Erfindung wird im folgenden anhand der beigefügten Zeichnung näher erläutert. In dieser stellen dar:
- Figur 1:: Eine schematische Draufsicht der Achsaufhängung gemäß der vorliegenden Erfindung;
- Figur 2:: Eine erste schematische Seitenansicht der Achsaufhängung gemäß der vorliegenden Erfindung und
- Figur 3:: Eine zweite schematische Seitenansicht der Achsaufhängung gemäß der vorliegenden Erfindung.

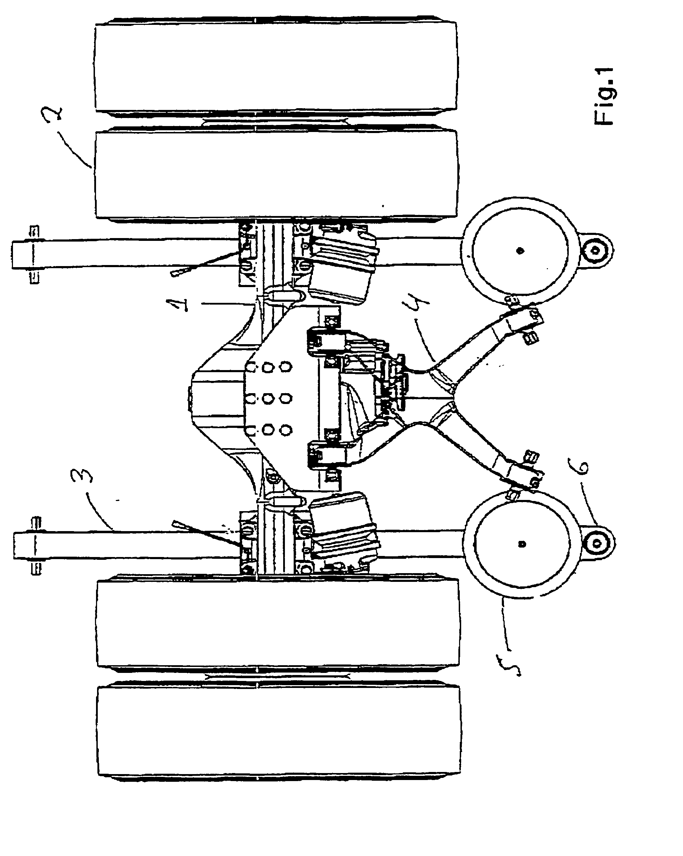

In Figur 1 wird eine Starrachse 1 eines Nutzfahrzeugs gezeigt; diese weist Zwillingsbereifungen 2 auf. Die Achse könnte auch mit einem Single-Reifen ausgeführt sein. Die Starrachse 1 ist durch Längsträger 3 mit dem Fahrzeugrahmen (nicht dargestellt) verbunden, wobei die Längsträger 3 in großem Abstand von der Längsmitte des Fahrzeugs an jeder Fahrzeugseite angeordnet sind. Desweiteren ist ein mittig und in der Höhenlage zu den Längsträgern 3 versetzt angeordneter Vierpunktlenker 4 vorgesehen, der sowohl mit der Achse 1 als auch mit dem Fahrzeugrahmen (nicht dargestellt) verbunden ist.

Der Vierpunktlenker 4 weist zwei gekreuzte Arme auf, die in einer Ebene angeordnet sind und in einem Zentralbereich ineinander übergehen.

Wie in der Figur 1 ersichtlich, ist der Vierpunktlenker 4 in Fahrtrichtung nach hinten angeordnet, was in Raumgewinn sowie in untersteuerndem Fahrverhalten resultiert.

Die Luftfedern 5 sind auf den Längsträgern 3 und erfindungsgemäß hinter den Reifen 2 angeordnet; hinter den Federn 5 ist jeweils eine Stossdämpferanordnung 6 vorgesehen.

Die Anbindung der Längsträger 3 mit der Achse 1 und mit dem Fahrzeugrahmen ist gemäß der Erfindung gelenkig ausgebildet. Hierbei werden Molekulargelenke, beispielsweise Gummigelenke verwendet. Dies ermöglicht die Übernahme der Stabilisierung allein durch den Vierpunktlenker 4. Hierbei ist es notwendig, dass die Anbindungspunkte des Längsträgers 3, nämlich rahmenseitig und achsseitig sowie die Luftfeder 5 auf einer Linie angeordnet sind, um ein Abkippen zu vermeiden.

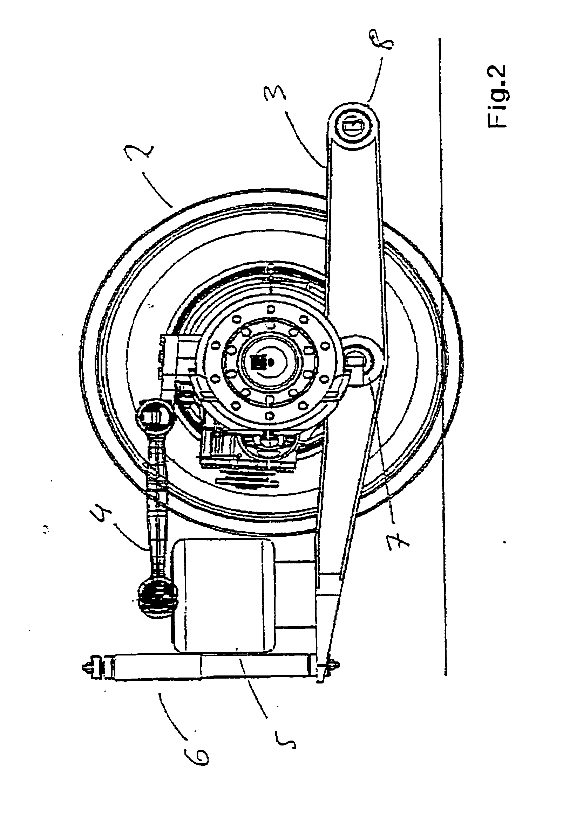

Dieser Zusammenhang wird anhand Figur 2 deutlich:
Der Anbindungspunkt 7 des gezeigten Längsträgers 3 mit der Achse 1 ist als Molekulargelenk ausgebildet; das gleiche gilt auch für den rahmenseitigen Anbindungspunkt 8. Hierbei sind die Anbindungspunkte 7, 8 und die Luftfeder 5 auf einer Linie angeordnet.

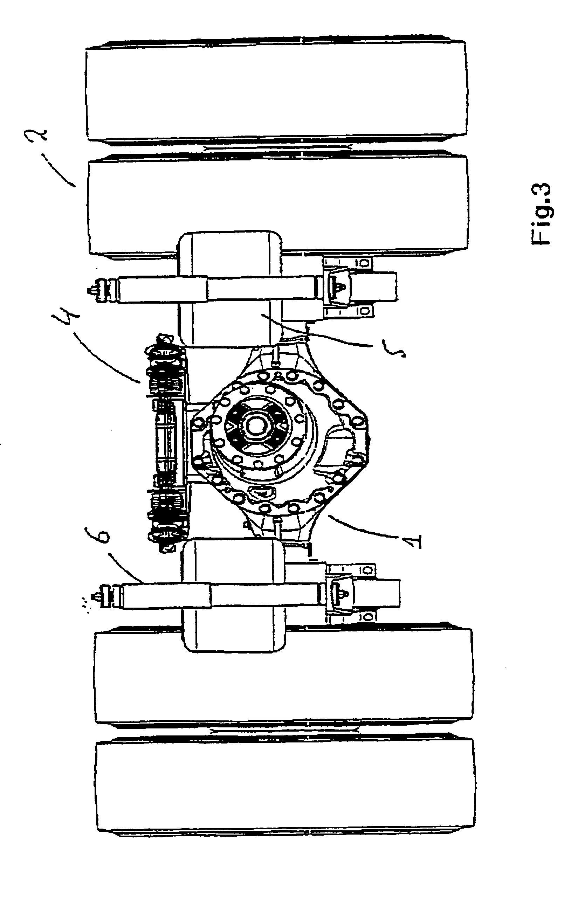

Figur 3 zeigt eine weitere Seitenansicht der erfindungsgemäßen Anordnung zur Achsaufhängung. Hierbei sind die Stossdämpfer 6, die Luftfedern 5, der Vierpunktlenker 4, die Reifen 2 und die Achse 1 mit dem Differential eingezeichnet.

Der Vierpunktlenker kann im Rahmen einer nicht dargestellten weiteren Variante der vorliegenden Erfindung als Dreieckslenker mit Stabilisator ausgebildet werden. Dieser kann einteilig oder zweiteilig ausgeführt sein.

### Bezugszeichen

- 1: Starrachse
- 2: Zwillingsreifen
- 3: Längsträger
- 4: Vierpunktlenker
- 5: Luftfeder
- 6: Stossdämpfer
- 7: Anbindungspunkt Längsträger/Starrachse
- 8: Anbindungspunkt Längsträger/Fahrzeugrahmen

## Patentansprüche

1. Achsaufhängung für Starrachsen von Nutzfahrzeugen und insbesondere von Reisebussen, mit an jeder Fahrzeugseite auf gleicher Höhe angebrachten Längslenkern (3), die die Fahrzeugstarrachse (1) mit dem Fahrzeugrahmen verbinden und mit einem in zur Höhenlage der Längslenker (3) versetzten Höhenlage angeordneten Mehrfachlenker (4), wobei ein Ende des Mehrfachlenkers am Starrachskörper (1) und das zweite Ende am Fahrzeugrahmen befestigt ist und wobei Luftfedern (5) und Stoßdämpfer (6) vorgesehen sind, **dadurch gekennzeichnet, dass** der Mehrfachlenker (4) in Fahrtrichtung nach hinten angeordnet ist , dass die längslenken (3) als Längsträgen (3) ausgebildet Dindund dass auf den Längsträgernzwei in Fahrtrichtung nach hinten angeordnete Luftfedern (5) vorgesehen sind.

2. Achsaufhängung nach Anspruch 1, **dadurch gekennzeichnet, dass** die Anbindung der Längsträger (3) mit der Starrachse (1) und mit dem Fahrzeugrahmen gelenkig ausgebildet ist.

3. Achsaufhängung nach Anspruch 2, **dadurch gekennzeichnet, dass** zur achs- und rahmenseitigen Anbindung (7, 8) der Längsträger Molekulargelenke vorgesehen sind.

4. Achsaufhängung nach einem der vorangehenden Ansprüche, **dadurch gekennzeichnet, dass** die Luftfedern (5) hinter den Reifen (2) des Fahrzeugs angeordnet sind.

5. Achsaufhängung nach einem der vorangehenden Ansprüche, **dadurch gekennzeichnet, dass** die Anbindungspunkte (7, 8) des Längsträgers (3) und die auf dem Längsträger (3) vorgesehene Luftfeder (5) auf einer Linie angeordnet sind.

6. Achsaufhängung nach einem der vorangehenden Ansprüche, **dadurch gekennzeichnet, dass** die Stoßdämpfer (6) hinter den Luftfedern (3) angeordnet sind.

7. Achsaufhängung nach einem der vorangehenden Ansprüche, **dadurch gekennzeiehnet, dass** der Mehrfachlenker (4) ein Vierpunktlenker (4) ist.

8. Achsaufhängung nach Anspruch 7, **dadurch gekennzeichnet, dass** der Vierpunktlenker (4) zwei gekreuzte Arme aufweist, die in einer Ebene angeordnet sind und in einem Zentralbereich ineinander übergehen.

9. Achsaufhängung nach einem der Ansprüche 1 bis 6, **dadurch gekennzeichnet, dass** der Mehrfachlenker (4) als Dreieckslenker mit Stabilisator ausgebildet ist.

## Claims

1. Axle suspension for rigid axles of utility vehicles and in particular of tourist buses, with longitudinal control arms (3) mounted at the same height on each vehicle side which connect the vehicle rigid axle (1) to the vehicle frame, and with a multiple steering unit (4) disposed offset from the height position of the longitudinal control arms (3), and one end of the multiple steering unit is secured to the rigid axle body (1) and the second end to the vehicle frame, pneumatic springs (5) and vibration dampers (6) being provided, **characterised in that** the multiple steering unit (4) is disposed to the rear in the direction of travel, the longitudinal control arms (3) are provided in the form of longitudinal supports (3) and two pneumatic springs (5) are provided on the longitudinal supports towards the rear in the direction of travel.

2. Axle suspension as claimed in claim 1, **characterised in that** the linkage of the longitudinal supports (3) to the rigid axle (1) and to the vehicle frame is of an articulated design.

3. Axle suspension as claimed in claim 2, **characterised in that** molecular joints are used to provide the axle-end and frame-end linkage (7, 8) for the longitudinal supports.

4. Axle suspension as claimed in one of the preceding claims, **characterised in that** the pneumatic springs (5) are disposed behind the tyres (2) of the vehicle.

5. Axle suspension as claimed in one of the preceding claims, **characterised in that** the linkage points (7, 8) of the longitudinal support (3) and the pneumatic spring (5) provided on the longitudinal support (3) are disposed on a same line.

6. Axle suspension as claimed in one of the preceding claims, **characterised in that** the vibration dampers (6) are disposed behind the pneumatic springs (3).

7. Axle suspension as claimed in one of the preceding claims, **characterised in that** the multiple steering unit (4) is a four-point steering unit (4).

8. Axle suspension as claimed in claim 7, **characterised in that** the four-point steering unit (4) has two crossed arms which are disposed in one plane and merge with one another in a central region.

9. Axle suspension as claimed in one of claims 1 to 6, **characterised in that** the multiple steering unit (4) is a three-point steering unit with stabiliser.

## Revendications

1. Suspension d'essieu pour essieux rigides de véhicules utilitaires et en particulier d'autocars, avec des bras oscillants longitudinaux (3) placés à même hauteur sur chaque côté du véhicule, lesquels relient l'essieu rigide de véhicule (1) au châssis du véhicule et avec un bras oscillant multiple (4) disposé à une hauteur décalée par rapport à la hauteur des bras oscillants longitudinaux (3), une extrémité du bras oscillant multiple étant fixée au corps d'essieu rigide (1) et la seconde extrémité au châssis du véhicule, et des ressorts pneumatiques (5) ainsi que des amortisseurs de chocs (6) étant prévus, **caractérisée en ce que** le bras oscillant multiple (4) est disposé vers l'arrière dans le sens de marche, **en ce que** les bras oscillants longitudinaux (3) sont réalisés sous la forme de longerons (3) et **en ce que** sur les longerons sont prévus deux ressorts pneumatiques (5) disposés vers l'arrière dans le sens de marche.

2. Suspension d'essieu selon la revendication 1, **caractérisée en ce que** l'attache des longerons (3) à l'essieu rigide (1) et au châssis du véhicule est réalisée articulée.

3. Suspension d'essieu selon la revendication 2, **caractérisée en ce que** des articulations moléculaires sont prévues pour l'attache (7, 8) côté essieu et côté châssis.

4. Suspension d'essieu selon l'une quelconque des revendications 1 à 3, **caractérisée en ce que** les ressorts pneumatiques (5) sont disposés derrière les pneus (2) du véhicule.

5. Suspension d'essieu selon l'une quelconque des revendications 1 à 4, **caractérisée en ce que** les points d'attache (7, 8) du longeron (3) et le ressort pneumatique (5) prévu sur le longeron (3) sont disposés sur une ligne.

6. Suspension d'essieu selon l'une quelconque des revendications 1 à 5, **caractérisée en ce que** les amortisseurs de chocs (6) sont disposés derrière les ressorts pneumatiques (5).

7. Suspension d'essieu selon l'une quelconque des revendications 1 à 6, **caractérisée en ce que** le bras oscillant multiple (4) est un bras oscillant à quatre points (4).

8. Suspension d'essieu selon la revendication 7, **caractérisée en ce que** le bras oscillant à quatre points (4) comporte deux bras croisés qui sont disposés dans un plan et s'étendent l'un dans l'autre dans une zone centrale.

9. Suspension d'essieu selon l'une quelconque des revendications 1 à 6, **caractérisée en ce que** le bras oscillant multiple (4) est réalisé sous la forme d'un bras oscillant triangulaire avec stabilisateur.
